# EUROPEAN PATENT SPECIFICATION

(11) **EP 4 312 562 B1**
(45) Date of publication and mention of the grant of the patent: **02.12.2026**
(21) Application number: 22718869.5
(22) Date of filing: 25.03.2022
(51) Int. Cl.: A01N 63/22, A01N 63/27, A01P 1/00

(54) **BACTERIAL STRAINS FOR PREVENTING ESTABLISHMENT AND GROWTH OF HUMAN PATHOGENS ON VEGETABLES**
BAKTERIENSTÄMME ZUR VORBEUGUNG DER BESIEDLUNG UND DES WACHSTUMS VON MENSCHLICHEN PATHOGENEN ON GEMÜSE
SOUCHES BACTÉRIENNES POUR LA PRÉVENTION DE LA COLONISATION ET DE LA CROISSANCE DE PATHOGÈNES HUMAINS SUR LES LÉGUMES

(30) Priority: 30.03.2021 SE 2150385
(43) Date of publication of application: 07.02.2024
(73) Proprietor: VivoProtect AB, 275 63 Blentarp (SE)
(72) Inventor: UHLIG, Elisabeth, 247 55 Dalby (SE); HÅKANSSON, Åsa, 245 42 STAFFANSTORP (SE)
(74) Representative: AWA Sweden AB
(86) International application number: PCT/EP2022/057862
(87) International publication number: WO 2022/207474

(56) References cited:
- US-A1- 2017 135 351
- US-A1- 2021 085 729
- UHLIG ELISABETH ET AL: "Comparative immunomodulatory effects in mice and in human dendritic cells of five bacterial strains selected for biocontrol of leafy green vegetables", FOOD AND CHEMICAL TOXICOLOGY, PERGAMON, GB, vol. 165, 10 May 2022 (2022-05-10), XP087095705, ISSN: 0278-6915, [retrieved on 20220510], DOI: 10.1016/J.FCT.2022.113064

## Description

### Technical field of the invention

The present invention relates to bacterial strains for preventing establishment and growth of human pathogens on seeds and vegetables. It also relates to the use of said strains in different applications.

### Technical Background of the invention

Leafy green vegetables are included in a large number of diets around the world and considered a nutritious and healthy food component. However, as the demand of fresh and convenient vegetables increases, so does the number of food-borne illness outbreaks. Contamination with human pathogens can occur in the whole production chain, and as the product is eaten raw, microorganisms are difficult to remove or wash away with tap water. The efficacy of chlorine treatments aimed to reduce the bacterial load is questioned and believed to pose health and environmental risks. The use of chlorine is also forbidden in many countries. The principle of biopreservation, or biological control, is to instead use antagonistic bacteria or their metabolites in order to control the growth and survival of pathogens. The posed mechanisms behind the effect are for example competition of nutrients or physical space, or production of antagonistic compounds. In previous studies, biological control has been used with bacteria isolated from fresh produce to prevent *Salmonella chester and Listeria monocytogenes* on green pepper discs. Mixed isolates of the native microbiota of the endive were found to protect against *L*. *monocytogenes* and strains of lactic acid bacteria inhibited Aeromonas *hydrophilia, L. monocytogenes, Salmonella enterica* and *Staphylococcus aureus.* Although *E. coli* is one of the most common and severe pathogens that can be found on leafy greens, only a few investigations have been performed to prevent its growth through biopreservation. However, in biopreservation is it important, to focus on antagonistic bacteria that are non-pathogenic, concerning both humans and plants. Up to the present time, the effect of antagonistic bacterial strains on human pathogens have not been tested on live plants, and especially not in real production settings, which is crucial in order to evaluate the potential of bacterial strains for commercial use. Previous studies have only been performed on sterilized leaf systems, where the native microbiota has been removed, which is realized to be entirely different than a real field production system.

Competition for space and coexistence in an already established ecosystem should be one of the most important challenges for survival and growth of a potential bacterial strain, which can only be measured *in planta.*

US 2017/135351 describes the use of antagonistic bacteria against plant pathogens and

WO2016/005974 discloses biocontrol of seed-associated diseases in seedlings. A formulation comprising a particulate matter in an oil and bacterial cocktail is described. In table 5B of said document it is only plant pathogens against which the formulation has been tested. The family *Enterobacteriaceae* is mentioned as an example of a plant pathogen. *Enterobacteriaceae* is a big and diverse family of bacterial species. Some species are associated with human disease, e.g. *E. coli,* and some with plant-associated diseases, e.g. *Erwinia.* Because of the diversity within the *Enterobacteriaceae* family, it is impossible to draw conclusions whether one antagonistic strain will work against all *Enterobacteriaceae* species if it for instance has an antagonistic effect against one or a few. It is not given that an antagonist against plant pathogens is also effective against human pathogens, even if the pathogens belong to the same taxonomical family of bacteria. Pathogenicity of bacteria is strain specific and plant pathogens are in general not human pathogens.

Thus, there is a need to provide novel and improved bacterial strains having both the effect of a higher pathogen resistance, especially human pathogen resistance, on live plants and altering the microbiota of the plants in a healthier direction for the consumer. In addition, it is desirable to obtain bacterial strains which are robust enough to handle a real life field production system and are stable over time, i.e. have improved storage cababilites.

### Summary of the Invention

In the light of the above, it is an object of the present inventive concept to provide at least one bacterial strain, wherein one or more of the above-mentioned disadvantages of the prior art are addressed.

According to a first aspect, the present invention relates to a bacterial strain isolated from edible leaves chosen from the group consisting of *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207, for preventing establishment and growth of human pathogens on seeds and vegetables.

As will be described in detail below, the above mentioned strains have surprisingly been shown to have antagonistic effects against potential, human pathogens such as E. coli on live plants in a commercial field setting.

Through seed coating with above bacterial strains, it has been shown that it is possible to influence the microbial composition of the plant in a healthier direction for the consumer. In that way the risk of pathogenic multiplication and spread on leafy green vegetables can be reduced, and the consequences of their related outbreaks in the future can be mitigated. It has also been observed that an increased bacterial diversity of vegetables such as leafy vegetables, once grown, is obtained after sowing.

The present invention provides, in another aspect, a composition comprising at least one bacterial strain chosen from the group consisting of *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207 for preventing establishment and growth of human pathogens on seeds and vegetables.

The present invention provides, in yet another aspect, use of at least one bacterial strain as described above for preventing establishment and growth of human pathogens on seeds and vegetables.

The present invention provide, in yet another aspect of the invention, a isolated strain chosen from the group consisting of *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207.

The novel strains as disclosed herein are non-pathogenic bacterial strains isolated from edible leaves that are able to mitigate e.g. *Escherichia coli in vivo* on plants in the field.

### Description of the figures

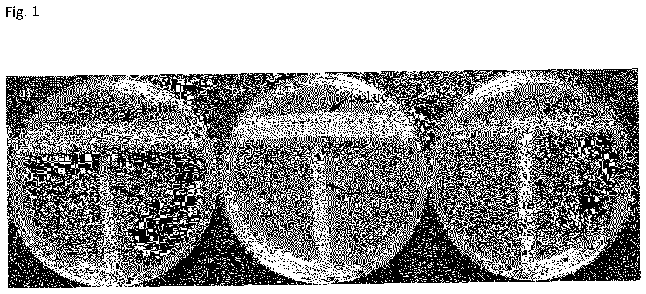

Figure 1: Perpendicular streak method a) Antagonistic effect against *E. coli* shown as a gradient where *E. coli* is less prone to grow. b) Antagonistic effect against *E. coli* is shown as a measurable inhibition zone where *E. coli* is not able to grow. c) A negative result, no inhibition zone can be visualized.

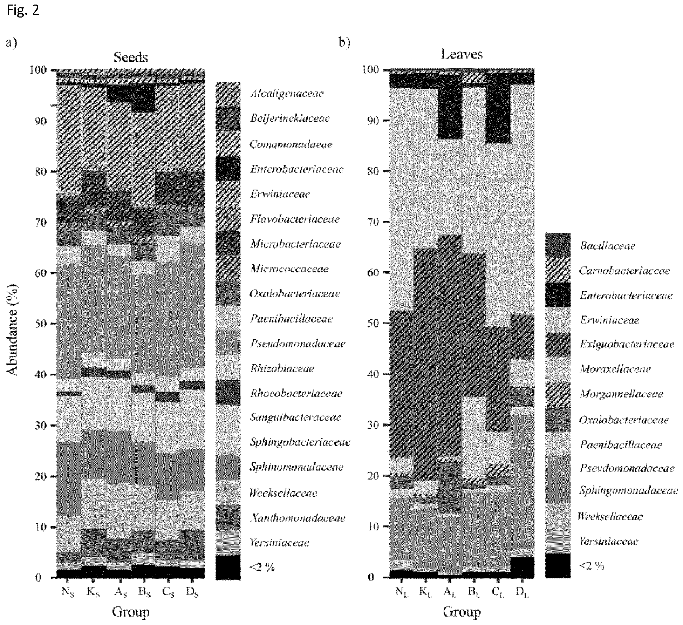

Figure 2: Bacterial abundance at family level. a) seeds coated with *E. coli* antagonistic bacteria. N_{S}=untreated seeds (n=2), K_{S}=coated control (n=2), A_{S}=*P*. *cedrina* LMG P-32207 (n=2), B_{S}=*P*. *punonensis* LMG P-32204 (n=2), C_{S}=*B*. *coagulans* LMG P-32205 (n=1) and D_{S}= *B*. *coagulans* LMG P-32206 (n=2). b) plants from the seeds in a). N_{L} (n=5), K_{L} (n=6), A_{L} (n=5), B_{L} (N=6), C_{L} (n=6) and D_{L} (n=6).

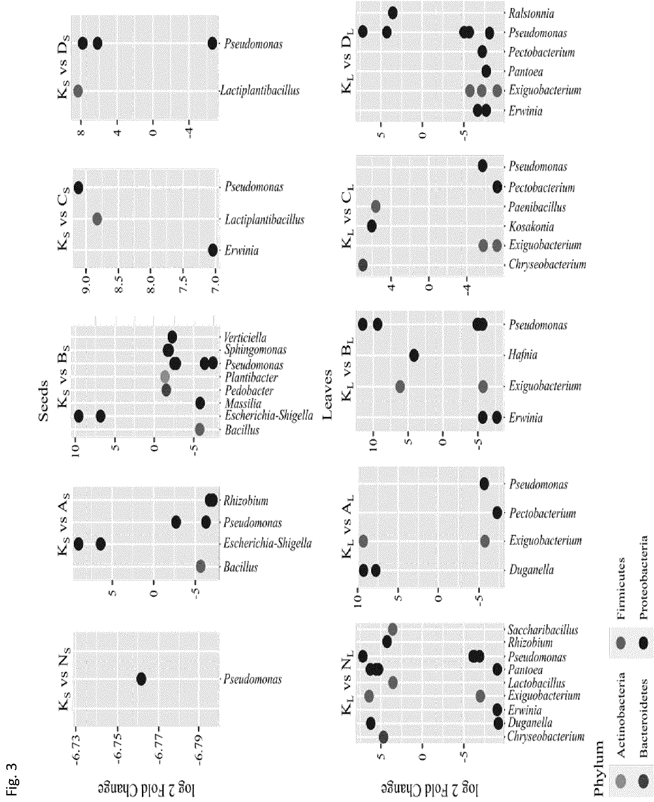

Figure 3: Log 2 fold change plots of leaves and seeds at genus level analyzed group-wise by DESeq2 with p-value cutoff at 0.001. All groups are compared to coated control (K). NS=untreated seeds (n=2), KS=coated control (n=2), AS=P. cedrina LMG P-32207 (n=2), BS=P. punonensis LMG P-32204 (n=2), CS=B. coagulans LMG P-32205 (n=1) and DS=B. coagulans LMG P-32206 (n=2). b) plants from the seeds in a). NL(n=5), KL(n=6), AL(n=5), BL(N=6), CL(n=6) and DL(n=6). Note that the y-axes display different intervals. Positive log2 fold change values indicate higher ASV abundance in the treatment group, and negative values indicate higher abundance in the coated control group (K). Multiple symbols within the same genus represent different ASVs assigned to the same genus.

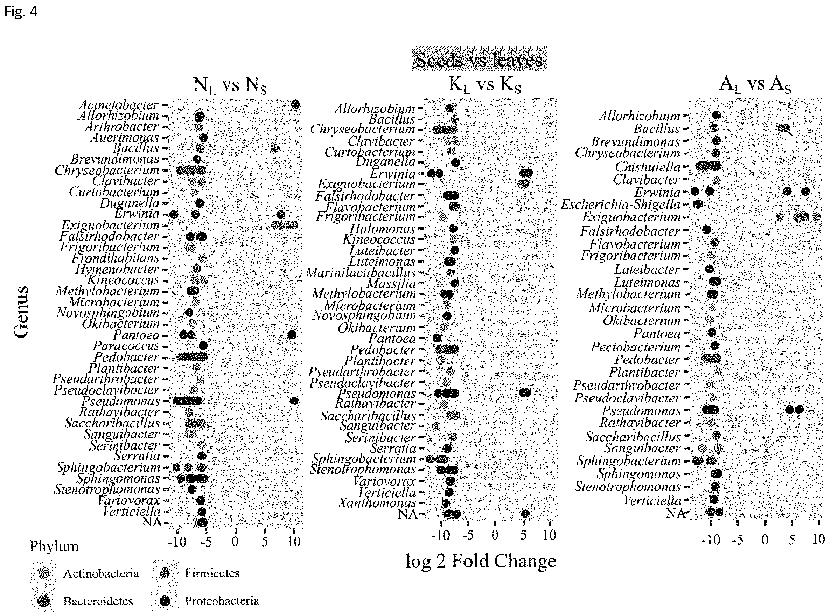

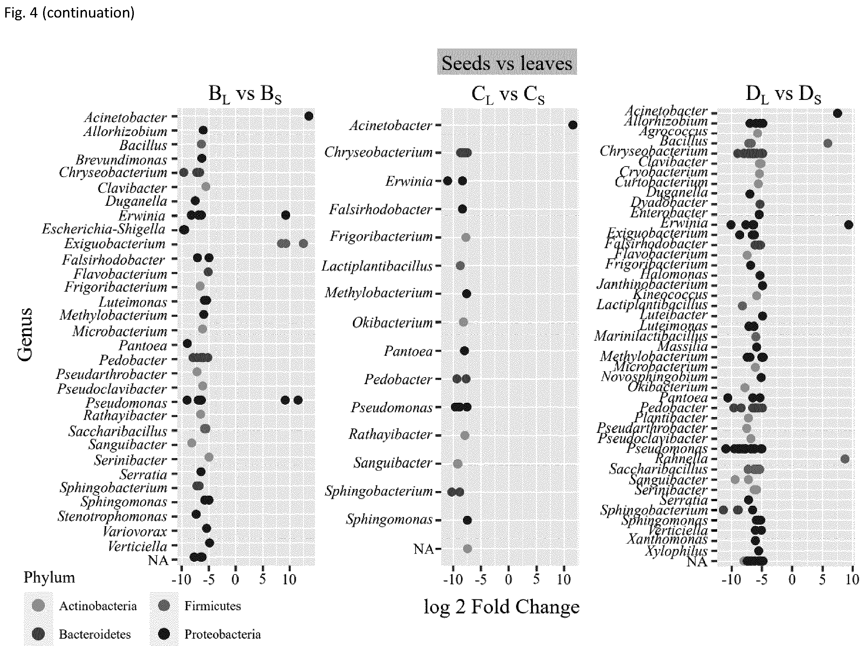

Figure 4: Log 2 fold change plots of leaves and seeds compared within the same group by DESeq2 with p-value cutoff at 0.001. N_{S}=untreated seeds (n=2), K_{S}=coated control (n=2), A_{S}=*P*. *cedrina* LMG P-32207 (n=2), B_{S}=*P*. *punonensis* LMG P-32204 (n=2), C_{S}=*B*. *coagulans* LMG P-32205 (n=1) and D_{S}= *B*. *coagulans* LMG P-32206(n=2). b) plants from the seeds in a). N_{L} (n=5), K_{L} (n=6), A_{L} (n=5), B_{L} (N=6), C_{L} (n=6) and D_{L} (n=6). Positive log2 fold change values indicate higher ASV abundance in seeds, and negative values indicate higher abundance in leaves. Multiple symbols within the same genus represent different ASVs assigned to the same genus.

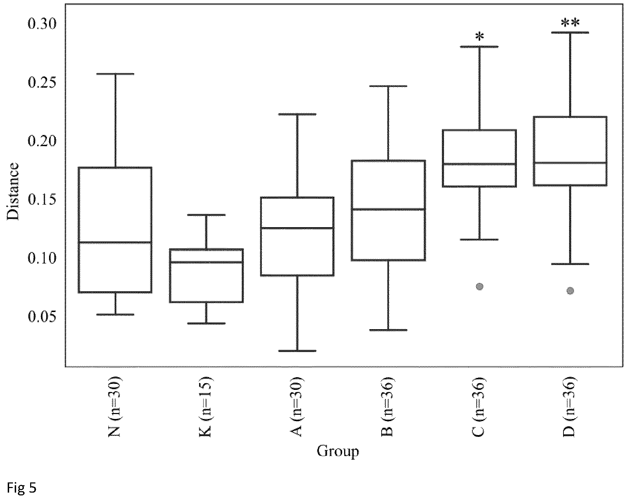

Figure 5: β-diversity of leaf samples calculated by weighted unifrac and compared pairwise with Permutational multivariate analysis of variance (PERMANOVA). Group N is leaves from untreated seeds, K from seeds coated with only freezing media (coated control), A from seeds coated with *P*. *cedrina* LMG P-32207, B with *P. punonensis* LMG P-32204, and C with *B*. *coagulans* LMG P-32205 and D with *B*. *coagulans* LMG P-32206. * p<0.05, ** p<0.01 compared to coated control, K. n=number of comparisons.

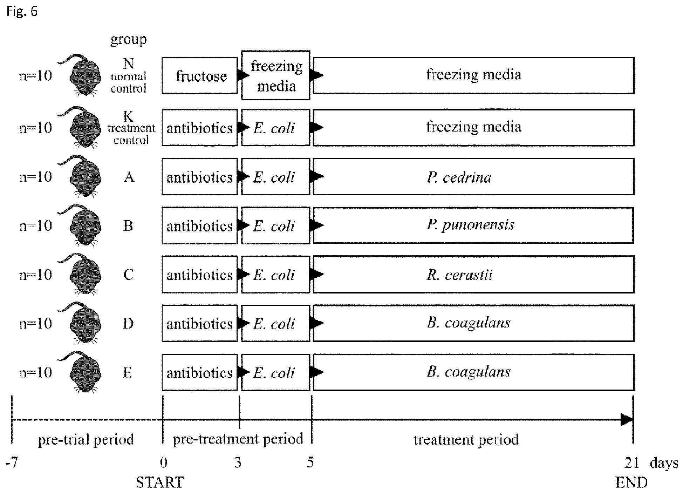

Figure 6: Experimental design of the animal study. Water consumption was measured daily, and feed consumption at the end. Body weights were registered at start, after pre-treatment and at the end.

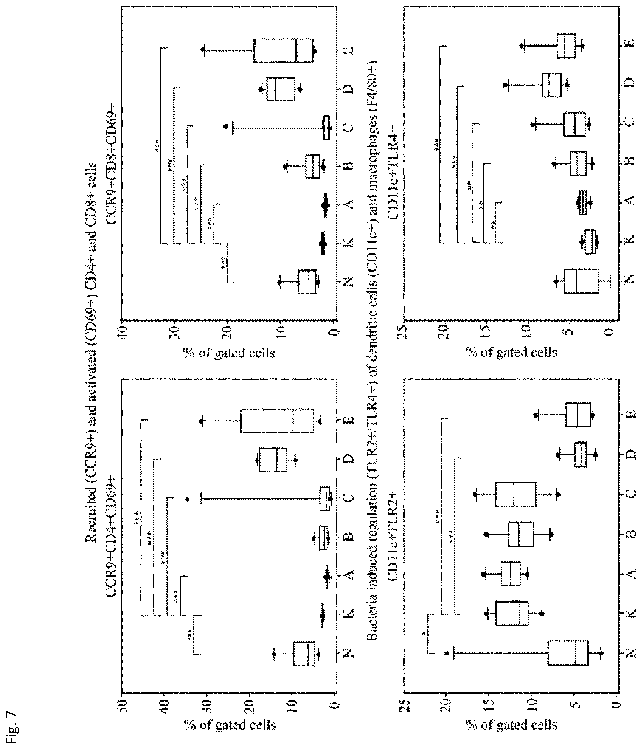

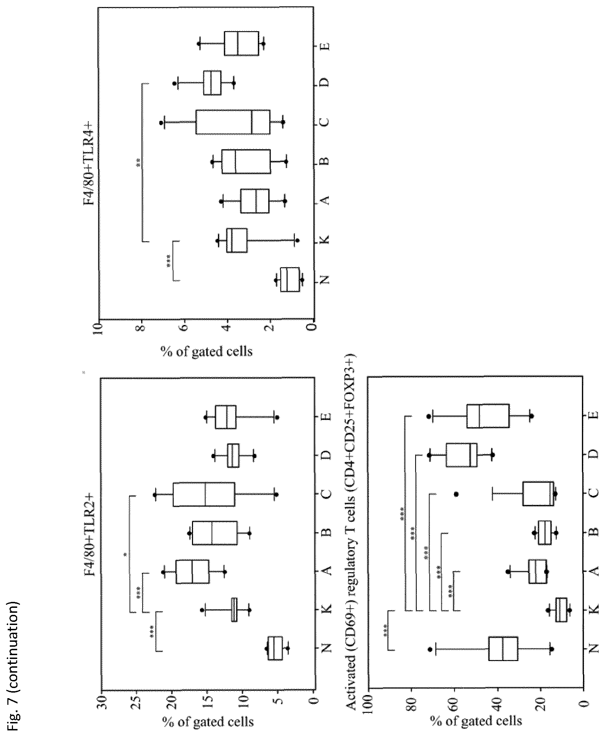

Figure 7: Immune cell populations of mesenteric lymph nodes analyzed by flow cytometry. ^{*}P<0.05, ^{**}P<0.01 and ^{***}P<0.001 compared to treatment control (K).

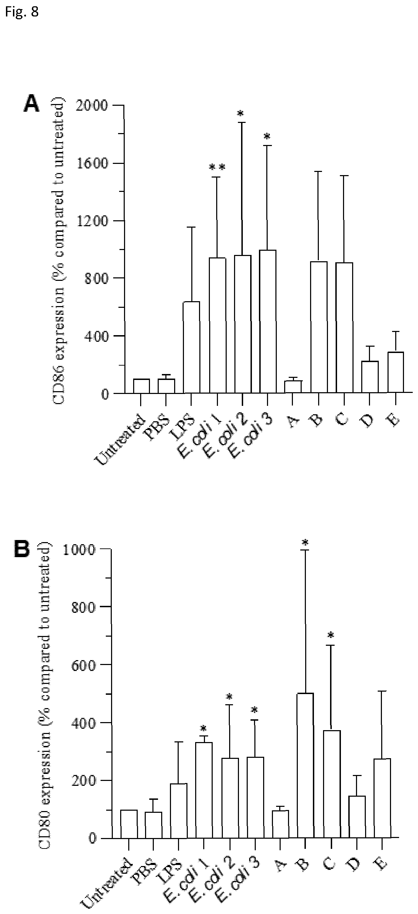

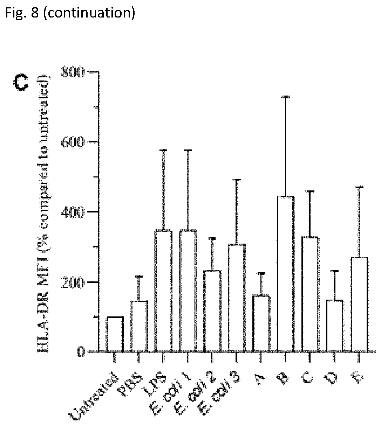

Figure 8: Activation marker expression on MoDCs (n=5) investigated by flow cytometry after 24 h of stimulation with indicated bacteria preparations. *P<0.05 and **P<0.01 compared to PBS. CD86 and CD80 data shown as mean % of positive cells in sample/mean % of positive cells in unstained (std.dev). HLA-DR data shown as median fluorescence intensity (MFI) mean % of y-median of sample/mean % of y-median of unstained (std.dev).

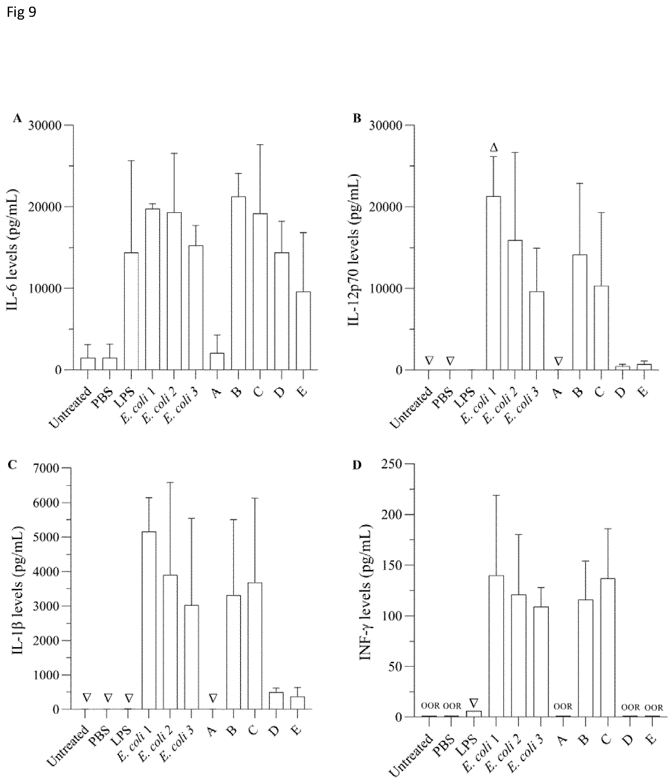

Figure 9: Cytokine expression (please note different scaling) by MoDCs (n=3, in technical duplicates) stimulated for 24 hours with the indicated bacterial preparations in a 10:1 bacteria-to-MoDC ratio. Due to values out of range and high variation, no statistical evaluation was performed. △ indicates one or more replicates out of range on the upper limit, ∇ indicates one or more replicates out of range on the lower limit. OOR - all replicates measured are below detection limit.

### Definitions

The term "probiotic" as used herein means a live microorganism that provides health benefits when consumed by an individual, usually within the gastrointestinal tract.

The term "cfu" means colony forming units and is a generally used unit in microbiology to estimate the number of *viable* bacteria cells in a sample. In the present application cfu is used in connection with cfu per ml, i.e. cfu/ml. The term "α diversity" as used herein means a measure to estimate richness (number of species) and/or evenness (distribution of species) within individual samples. α diversity may be calculated with by Shannon-Wiener index (H'= -Σ *pᵢ* In *pᵢ*), taking into account both richness and evenness.

The term "β diversity" as used herein means a measure to compare samples from different groups to identify differences in the overall community composition and structure. The UniFrac method is a measure of β-diversity and also takes the relative relatedness of species into account.

The term "antagonistic" as used herein in connection with antagonistic bacterial strains means strains with the capacity to reduce human and/or plant pathogens.

### Detailed Description of the Invention

The present invention will now be described more fully hereinafter. In addition, singular references do not exclude a plurality. In the context of the present invention, the terms "a", "an" does not preclude a plurality.

The present inventive concepts are, at least in part, based on unexpected realisations that certain bacterial strains isolated from edible leaves have desirable properties, including e.g. the effect of a higher pathogen resistance on live plants and altering the microbiota of the plants in a healthier direction of the consumer.

As stated above the present invention relates to a bacterial strain isolated from edible leaves chosen from the group consisting of *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207, for preventing establishment and growth of human pathogens on seeds and vegetables. Said at least one strain may prevent establishment and growth of the human pathogens *Escherichia spp and Enterobacteriaceae species* on seeds and vegetables such as leafy vegetables greens. Examples of pathogenic genera within the family of *Enterobacteriaceae are Klebsiella, Enterobacter, Citrobacter, Salmonella, Escerichia coli, Shigella, Proteus, Serratia and Pantoea. Examples of Escherichia spp are E. coli, E. albertii, E. blattae, E. fergusonii, E. hermannii and E. vulneris.*

The bacterial strains as disclosed above have been shown to be antagonistic against *E. coli* which has been tested in an industrial field production system as described below. Spinach seeds were coated with said bacterial strains, *Pseudomonas punonensis* having accession number LMG P-32204, *Bacillus coagulans* having accession number LMG P-32205, *Bacillus coagulans* having accession number LMG P-32206, and Pseudomonas cedrina having accession number LMG P-32207. It was tested whether the bacterial strains of the invention were able to survive the coating process and were able to establish in the native microbiota on the leaves. Changes in *Pseudomonas* species were plentiful and higher abundances could be observed for different species in all samples, both on seeds and leaves.

More specifically, a reduction of the abundance of *E. coli-Shigella* from seed to plant was seen for two of the bacterial strains (*Pseudomonas cedrina* LMG P-32207and *Pseudomonas punonensis* LMG P-32204). Other indications of a less pathogenic microbiota composition were present; seeds inoculated with two of the strains (*Bacillus coagulans* LMG P-32205 and *Bacillus coagulans* LMG P-32206) had increased abundance of *Lactobacillaceae,* one of them had lower abundance of *Pantoea.* Moreover, all tested antagonistic strains lowered the abundance of the plant pathogenic genera *Erwinia* and/or *Pectobacterium* on the leaves.

In an embodiment said bacterial strain is for preventing establishment and growth of human and plant pathogens on seeds and vegetables. Thus, the bacterial strain may also have an effect against plant pathogens in addition to human pathogens.

The present invention provides, in another aspect, a composition comprising at least one bacterial strain chosen from the group consisting of *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207 for preventing establishment and growth of human pathogens on seeds and vegetables.

In an embodiment said composition is for preventing establishment and growth of human and plant pathogens on seeds and vegetables. Thus, the composition comprising at least one of the above bacterial strains may also have an effect against plant pathogens in addition to human pathogens.

The composition may comprise any other conventionally known additive which may be suitable together with the at least one bacterial strain and the form it may be present in, e.g. freeze-dried form.

The at least one strain as disclosed above may be present in a freeze-dried form, air-dried form, frozen form or liquid form. The methods for preparing the before said forms of the at least one strain are available to the skilled person within the technical field.

The composition may comprise one or more of the bacterial strains in the same composition, for instance two or more strains, such as three strains. In an embodiment all four strains may be used in combination in the composition. In such a case all of the individual features of each strain will be combined in one composition having all of the beneficial properties .

There is also provided herein use of at least one bacterial strain or composition, for preventing establishment and growth of human pathogens on seeds and vegetables, such as leafy vegetables.

There is also provided herein use of at least one bacterial strain as described herein or a composition comprising said at least one bacterial strain, wherein said at least one strain is added to washing water for washing of vegetables prior to packaging or is sprayed on vegetables before, during or after packaging of the vegetables in a package.

There is also provided herein use of at least one bacterial strain as described herein or a composition comprising said at least one, bacterial strain, wherein said at least one strain is added to water in connection with irrigation or added to a nutrient solution in a hydroponic growth system. It has also been seen that plants with seeds inoculated with antagonistic bacterial strains showed increased seedling count, thus indicating that antagonistic bacterial strains increase yield. Thus, the antagonistic bacterial strains may be used as bio-fertilizer.

There is also provided herein use of at least one bacterial strain as described herein or a composition comprising said at least one bacterial strain, wherein said at least one strain is applied on the inside of a package or is applied in the lining of the package or in the packaging material of the package.

There is also provided herein use of at least one bacterial strain as described herein or a composition comprising said at least one bacterial strain, wherein said at least one strain is coated on seeds before sowing.

By the above provided different uses of the at least one bacterial strain as described herein or a composition comprising said at least one bacterial strain, pathogenic multiplication and spread on leafy green vegetables may be reduced, and the consequences of their related outbreaks in the future can be reduced.

The at least one strain may also be coated on seeds before sowing. The at least one strain may be coated on seeds with an amount of 10⁴ - 10¹² cfu/ml, for instance in an amount of 10⁶ - 10¹² cfu/ml such as an amount of 10⁴ - 10¹² cfu/ml or an amount of about 10⁶ - 10¹⁰ cfu/ml. Through seed coating with the bacterial strains described herein, it has been shown that it is possible to influence the microbial composition of the plant in a healthier direction for the consumer. The β-diversity was higher in plants from seeds inoculated with the two strains of *B*. *coagulans,* indicating that the microbial abundance in those groups are phylogenetically different compared to control. It is known that plants with a high microbial diversity has a higher pathogen invasion resistance.

Furthermore, it has been shown that the effect of seeds coated with said at least one strain as disclosed herein is kept during a time of at least six years, which indicate a strong robustness of the effect of strains of the invention. As seen in table 1 the inhibition of growth of E. coli was tested after six years and it remained stable.

There is also provided herein use of at least one bacterial strain as described herein or a composition comprising said at least one bacterial strain, for increasing the bacterial diversity on vegetables such as leafy vegetables as obtained after sowing.

There is also provided herein at least one isolated strain as described above or a composition comprising said at least one isolated strain for use in protection against infection in humans. As will be described more closely in the experiments, immunomodulatory effects of the bacterial strains as disclosed herein have been observed.

### Definition of strains

The novel strains as disclosed herein are non-pathogenic bacterial strains isolated from edible leaves.

All strains have been deposited at BCCM/LMG (Belgian Coordinated Collections of Micro-organisms/Laboratorium voor Microbiologie, Universiteit Gent (UGent)), Gent, Belgium on January 26th 2021. The depositor is Åsa Håkansson who is both the inventor and applicant..
The deposition numbers are as follows.

| | |
|---|---|
| *Pseudomonas punonensis* | LMG P-32204, |
| *Bacillus coagulans* | LMG P-32205, |
| *Bacillus coagulans* | LMG P-32206, and |
| *Pseudomonas cedrina* | LMG P-32207. |

The strains are biologically pure. *Bacillus coagulans* is known to be a probiotic species.

### Experiments

### Isolation of bacterial strains

In this experiment the purpose was to identify potential *Escherichia coli* antagonists (specific bacterial strains) from the native microbiota on leafy green vegetables and evaluate their effect in an industrial field production setting. Out of 295 bacterial strains isolated from different types of leafy green vegetables, 37 showed effect against *E. coli in vitro.* A subset of the antagonistic strains was coated onto spinach seeds and planted in the field. Both seeds and plants were analyzed by Illumina Miseq next generation sequencing (NGS), and it was seen that the microbiota of the plants was altered in a healthier direction for the consumer. Higher β-diversity was observed for the samples treated with two of the bacterial strains, indicating a higher pathogen invasion resistance of the plants. A reduction of the abundance of *E. coli-Shigella* from seed to plant was seen for two of the bacterial strains (*Pseudomonas cedrina* LMG P-32207and *Pseudomonas punonensis* LMG P-32204). Other indications of a less pathogenic microbiota composition were present; seeds inoculated with two of the strains (*Bacillus coagulans* LMG P-32205 and *Bacillus coagulans* LMG P-32206) had increased abundance of *Lactobacillaceae,* one of them had lower abundance of *Pantoea.* Moreover, all tested antagonistic strains lowered the abundance of the plant pathogenic genera *Erwinia* and/or *Pectobacterium* on the leaves.

### Experimental description

### Isolation, in vitro testing and identification of antagonists

To isolate potential antagonistic bacteria, 5 bags each of iceberg lettuce, mangold, spinach and rocket (ea. 65 g) were purchased at a local supermarket in Lund, Sweden. Additionally, 30 bags of rocket were collected from a local leafy-greens producer. Microbial culturing was performed using the following growth media: Tryptic Soy Agar (TSA, Sigma-Aldrich, St. Louis, MO, USA), Casamino Acids Yeast Extract Dextrose agar (YCED: yeast extract, 0.3 g; casamino acids, 0.3 g; D-glucose, 0.3 g; K₂HPO₄, 2.0 g; agar, 18 g; distilled water 1000 mL), Water Yeast Extract agar (WYE: yeast extract, 0.25 g; K₂HPO₄, 0.5 g; agar, 18 g; distilled water 1000 mL), Raffinose-histidine agar (Raffinose, 10 g; L-histidine, 1 g; MgSO₄*7H₂O, 0.5 g; FeSO₄*7H₂O, 0.01 g; NaCl, 20 g; agar, 18 g; distilled water, 1000 ml), Casein-salt agar (Casein, 0.3 g; KNO₃, 1,25 g; NaCl, 47.25 g; K₂HPO₄, 1,25 g; MgSO₄*7H₂O, 0.05 g; CaCO₃, 0.02 g; FeSO₄*7H₂O, 0.01 g; agar, 18 g; distilled water, 1000 ml), ISP2 (yeast extract, 4 g; malt extract, 10 g; D-glucose, 4 g; agar, 18 g; distilled water, 1000 ml), and malt agar (Sigma-Aldrich, St. Louis, MO, USA). Incubation proceeded for 3 days at 30 °C for TSA, 7 days at 30 °C for YCED, WYE, Raffinose, Casein, ISP2 and ISP5 agar, and 7 days at 20 °C for malt agar. Colonies were isolated, streaked for purity and stored in freezing medium (K₂HPO₄, 0.85 g; KH₂PO₄, 0.2; Tri-sodium-citrate-dehydrate, 1.5 g; MgSO₄x7H₂O, 0.25 g; glycerol (99,5 %), 121.5 ml; distilled water, 875 ml at -80 °C. Strains were tested for antagonism against *E.coli* CCUG 29300^{T} with the perpendicular streak method on TSA plates, where the strain was streaked in a line on the plate and incubated for 3 days at 30 °C. After incubation, *E. coli* was streaked perpendicularly to the strain and the plate was further incubated for 24 h at 30 °C. The antagonistic effect was read as the presence of an inhibition zone larger than 3 mm, or a gradient on the line of *E*. *coli.* The same test was repeated six years later to evaluate whether the effect changes over time. Two strains recently isolated in the same lab from edible plants and identified by closest type strain to *Bacillus coagulans* DSM1^{T} (99.7 % identity) were tested against *E*. *coli* by the agar plug diffusion method described by Balouiri, Sadiki, and Ibnsouda (2016). Shortly, the B. *coagulans* strains were grown in dense mats on MRS agar (Merck KGaA, Darmstadt, Germany) for 7 days at 37 °C, and *E*. *coli* on Tryptic Soy Agar (Sigma-Aldrich) for 24 h at 37 °C. 1 cm² plugs of *B*. *coagulans* were cut out and transplanted into the *E*. *coli plates.* Antagonism in the form of absence of *E*. *coli* was detected in the form of a gradient on the TSA plate where *E*. *coli* could not grow.

### DNA purification and Sanger sequencing of antagonistic strains

Strains that showed antagonism in vitro were DNA purified and sequenced by Sanger sequencing. In short, purified strains were suspended in physiological saline following a bead beating step, and the supernatant was used for PCR, amplifying an approximately 1500 bp long fragment of the rRNA gene (16S) using the forward primer ENV1 (5'-AGAGTTTGATIITGGCTCAG-3') and the reverse primer ENV2 (5'-CGG ITA CCT TGT TAC GAC TT-3') (Eurofins Genomics, Ebersberg, Germany) and results were confirmed by gel electrophoresis. The PCR products were sent for Sanger sequencing at Eurofins Genomics (Ebersberg, Germany) on an ABI 3130xl Genetic analyzer (Applied biosystems, Foster City, CA, USA) using ENV1 as sequencing primer. The sequenced genes were trimmed to between 590 and 788 bp depending on sequence quality and compared to type strain sequences at the Ribosomal Database project (RDP) by the Seqmatch software.

### Field trial

Four different strains that showed antagonistic effect *in vitro* (*P. cedrina* LMG P-32207, *P. punonensis* LMG P-32204, *B. coagulans* LMG P-32205 and *B*. *coagulans* LMG P-32206) were evaluated by their impact on the microbial community of seeds and leaves in a commercial field setting with spinach as model crop. Seed inoculum was prepared by incubating 1 µl pure culture with 50 ml Tryptic Soy Broth (Sigma-Aldrich) for 24 h at 30 °C for *Pseudomonas* strains and MRS broth (Merck KGaA) for 6 days at 38 °C for *Bacillus coagulans* strains. After incubation, the strains were washed in physiological saline and diluted to a total volume of 40 ml in freezing media, and stored at - 80 °C until seed coating treatment.

Spinach seeds (Spinach 'Yuma' F1/PV1245, Batch # 366948 2018/2019, Pop Vriend Seeds, Andijk, The Netherlands) were divided into six treatment groups of 1100 g each as follows; normal control (N) contained untreated seeds, treatment control (K) with seeds coated only with freezing media; group A with seeds coated with *P*. *cedrina* LMG P-32207 (4*10¹² cfu/ml), group B with seeds coated with *P. punonensis* LMG P-32204 (9*10⁹ cfu/ml), group C with seeds coated with *B*. *coagulans* LMG P-32205 (1*10⁹ cfu/ml) and group D with seeds coated with *B*. *coagulans* LMG P-32206 (1*10⁹ cfu/ml). Seeds were coated with a laboratory coating machine SATEC Concept ML 2000 (SATEC Equipment GmbH, Elmshorn, Germany) for 2 minutes and dried with a laboratory drier SUET 819214/002 (SUET Saat- und Erntetechnik GmbH, Eschwege, Germany) for 4 minutes at room temperature. 100 g seeds from each group were taken out after treatment for microbial analysis.

The field trial was carried out in cooperation with an industrial partner in the south of Sweden. The weather was sunny and dry, with temperatures between 23-26 °C daytime, and 11-16 °C at night. The crops were sown in one raised bed 120 m long and 1.3 m wide, with each treatment group dedicated to 20 m, in which 6 plots of 1 m² were evenly staked out. Each 1 m² plot was considered one replicate. Harvesting was performed with aseptic technique 20 days later by cutting the plants within the plots 1.5 cm above the soil with scissors and transferring them to plastic bags and immediately put in a cool box until analysis in the laboratory. All equipment was sterilized between replicates.

### Next generation sequencing of microflora on seeds and plants

DNA extraction of leaves and seeds was performed. Samples of 2 g of plant material were placed in test tubes with 20 ml PBS (Oxoid Ltd., Blastingstoke, UK) and thereafter sonicated for 10 minutes. The plant material was removed and the remaining liquid centrifuged 20 min at 11600 x g. The supernatant was discarded and the remaining pellet stored at -18 °C until further processing by DNA purification. DNA purification was performed using the Nucleiospin^{®} Soil Kit (Macherey-Nagel, Düren, Germany) according to manufacturer's instructions. DNA concentration was measured using Qubit ^{™} 1x ds DNA HS Assay Kit (Life Technologies Corporation, Eugene, OR, USA). The PCR primers B969F (ACGCGHNRAACCTTACC) and BA1406R (ACGGGCRGTGWGTRCAA) (Eurofins Genomics, Ebersberg, Germany) were used with PCR reagents Kapa HiFi Hotstart Ready Mix (Kapa Biosystems Pty (Ltd), Salt River, Cape Town, South Africa) to amplify 470 bp of the V6-V8 hyper variable region of the 16S rRNA gene with the following PCR program: 25 cycles at 95 °C for 30 seconds, 25 °C for 30 seconds and 72 °C for 30 seconds, and a hold period of 5 min at 72 °C. The PCR products were purified using AMPure XP beads (Beckman Coulter Genomics, Brea, CA, USA). An index PCR was run at 95 °C for 3 minutes followed by 8 cycles of 95 °C for 30 seconds, 55 °C for 30 seconds and 72 °C for 30 seconds and the products were again measured with Qubit (Life Technologies). The length of the amplified fragments was measured on random samples with Agilent 2100 Bioanalyzer (Agilent Technologies, Waldbrunn, Germany) and Agilent DNA kit (Agilent Technologies, Vilnius, Lithuania), according to manufacturer's instructions after both PCR runs. The indexed samples were diluted to 4 nM with resuspension buffer (Illumina, San Diego, CA, USA) and sequenced on Illumina Miseq with Miseq reagent kit v3 (600-cycle) according to manufacturer's instructions. PhiX (Illumina) was used as internal control. The final loading volume was 600 µl.

The produced reads were demultiplexed by Illumina CASAVA 1.8 (Illumina) and filtered using DADA2 in Qiime 2 2020.6 and then further processed in R. The total number of reads after filtering was 3 128 913 and the mean number of reads per sample was 65 186. The sequences were trimmed at the ends at 25 bp left and 275 bp right. Samples containing <5000 reads were removed. Taxonomic classification of the remaining reads was made using the SILVA 132 database. Reads identified as eukaryotic, mitochondria or chloroplasts were removed.

### Calculations and statistical analysis

From the NGS data, abundance levels were calculated by the sum of OTUs for all replicates divided by total number of OTUs. α-diversity was calculated with Chao1 and Shannon indices. Abundance levels and α-diversity were compared groupwise by Kruskal-Wallis one-way analysis of variance on ranks, and two groups with Wilcoxon Rank sum test. β-diversity was calculated with weighted unifrac and compared by with permutational multivariate analysis of variance (PERMANOVA). The differential abundance between groups were analyzed on genus level by DESeq2 with a p-value cutoff at 0.001.

### Isolation, in vitro testing and identification

Out of 295 strains tested with the perpendicular streak method, 18 showed a measurable, clear zone (> 3 mm) where the *E. coli* could not grow, and in 19 strains, a gradient on the *E. coli* line could be observed. The strains that showed antagonistic effect were sequenced by their 16S rRNA gene and their putative identities are presented Table 1, together with their antagonistic effect in 2014 and in 2020. The antagonistic strains belonged primarily to the families *Micrococcaceae, Bacillaceae* and *Pseudomonadaceae.* The *Bacillus* strains mostly exhibited antagonism in the form of a clear zone that did not disappear during storage. The isolated *Pseudomonads* showed both zone and gradient, and about half of the strains kept their capacity after 6 years of storage. For the two *B*. *coagulans* strains, tested by the agar plug diffusion test, a gradient on the *E. coli* plate was observed.

**Table 1: Putative identification by 16S rRNA gene Sanger sequencing of strains exhibiting inhibition on the growth of E.coli in vitro year 2014 and again in 2020.**

| ID no. | Closest type strain name and original designation | Similarity (%) | *In vitro E. coli* antagonism year 2014^{a} | *In vitro E. coli* antagonism year 2020^{a} |
|---|---|---|---|---|
| MR2z | *Arthrobacter arilaitensis* (T) CIP 108037 | 99 | ++ | - |
| RR4a | *Arthrobacter arilaitensis* (T) CIP 108037 | 100 | + | - |
| RR8y | *Arthrobacter arilaitensis* (T) CIP 108037 | 99 | + | - |
| WM4.1 | *Arthrobacter chlorophenolicus* (T) A-6 | 99 | + | - |
| RR8x | *Arthrobacter oxydans* (T) DSM 20119 | 100 | + | - |
| RR10b | *Bacillus aerophilus* (T) 28K | 99 | ++ | ++ |
| MR2y | *Bacillus amyloliquefaciens* (T) FZB42 | 100 | ++ | - |
| YC19.1 | *Bacillus amyloliquefaciens* (T) FZB42 | 100 | + | ++ |
| MR6x2 | *Bacillus invictae* (T) Bi.FFUP1 | 98 | ++ | ++ |
| RR10a | *Bacillus safensis* (T) FO-036b | 100 | ++ | ++ |
| RR9b | *Bacillus safensis* (T) FO-036b | 100 | ++ | ++ |
| TS39.1 | *Delftia tsuruhatensis* (T) T7 | 100 | + | - |
| TSI4.2a | *Paenibacillus amylolyticus* (T) NRRL NRS-290T | 100 | ++ | - |
| YM2.2 | *Pantoea agglomerans* (T) DSM 3493 | 100 | + | - |
| RR9y | *Pantoea eucalypti* (T) LMG24197 | 99 | + | + |
| YC39.2 | *Pseudomonas azotoformans* (T) IAM1603 | 100 | + | - |
| YI3.1 | *Pseudomonas cedrina* (T) LMG P-32207 | 100 | ++ | ++ |
| RR1.2b | *Pseudomonas cedrina* (T) DSM 14938 | 100 | ++ | - |
| WS2.2 | *Pseudomonas constantinii* (T) CFBP 5705 | 100 | ++ | - |
| WS5.1 | *Pseudomonas extremaustralis* (T) CT14-3 | 100 | + | - |
| TM3.2 | *Pseudomonas fulva* (T) AJ2129 | 100 | + | ++ |
| TS20.1 | *Pseudomonas fulva* (T) AJ2129 | 100 | + | - |
| TS5.2 | *Pseudomonas fulva* (T) AJ2129 | 100 | ++ | ++ |
| YC27.1 | *Pseudomonas fulva* (T) AJ2129 | 99 | + | - |
| WM5.1 | *Pseudomonas grimontii* (T) CFML 97-514T | 98 | + | ++ |
| TS13.1 | *Pseudomonas helmanticensis* (T) OHA11 | 100 | + | - |
| WS2.1 | *Pseudomonas libanensis* (T) CIP 105460 | 99 | ++ | + |
| TS36.2 | *Pseudomonas orientalis* (T) CFML 96-170 | 100 | ++ | - |
| TSI4.2 | *Pseudomonas orientalis* (T) CFML 96-170 | 100 | + | - |
| WY39.2 | *Pseudomonas protegens* (T) CHAO | 100 | ++ | ++ |
| CR10b | *Pseudomonas punonensis* (T) LMG P-32204 | 100 | ++ | + |
| I2R6x | *Rhizobium nepotum* (T) 39/7 | 99 | ++ | - |
| WS1.1 | *Rhizobium nepotum* (T) 39/7 | 98 | + | - |
| WS3.1 | *Rhizobium nepotum* (T) 39/7 | 100 | + | + |
| WS5.2 | *Rhizobium nepotum* (T) 39/7 | 100 | + | ++ |
| MR5x | *Rhodococcus cerastii* (T) C5 | 100 | ++ | ++ |
| MR2x | *Xanthomonas arboricola* (T) LMG 747T | 100 | ++ | - |

| | | | | |
|---|---|---|---|---|
| ^{a} + Antagonism shown as gradient, ++ Antagonism shown as a clear zone > 3 mm | | | | |

The antagonistic strains were tested after being stored at -80 °C for 6 years without interruption, and while some had lost their effect, 8 out of 18 strains, that showed a clear zone, kept the same ability to counteract *E. coli,* most of them belonging to the *Bacillaceae* family. *Arthrobacter* and *Rhizobium* species mostly exhibits the weaker gradient form of antagonism, and most of them also lost their antagonism after storage, possibly indicating a plasmid carried trait. These results strongly suggest that it is important to verify that the antagonistic effect is stable over time when considering a strain for commercial application.

### Field trial

To evaluate the *E. coli* antagonistic potential of selected bacterial strains *in vivo* in the field, spinach seeds were coated with *P*. *cedrina* LMG P-32207, *P*. *punonensis* LMG P-32204, *B. coagulans* LMG P-32205 and B. *coagulans* LMG P-32206 in separate groups. A visual inspection of the plants at the time of harvest did not show any quality imperfections. Bacterial DNA extracted from both seeds and plants were sequenced by Illumina Miseq NGS sequencing. On both seeds and leaves, the most abundant phylum was Proteobacteria, 67.6 % and 67.4 % respectively. On seeds, the second most abundant phylum was Bacteriodetes (19.3 %), followed by Actinobacteria (9.2 %), but on leaves the second most common phylum was Firmicutes (31.1 %) followed by Bacteriodota (1.0 %).

The data on family level can be visualized in the taxa bar plot in Figure 2. The most abundant taxa on seeds were *Pseudomonadaceae* (22.4 %) followed by *Erwiniaceae* (17.1 %), *Springomonadaceae* (10.0 %), *Weeksellaceae* (8.9 %) and *Sphingobacteriaceae* (8.7 %). On leaves, the most abundant taxa were *Erwiniaceae* (34.5 %), *Exiguobacteriaceae* (28.6 %) and *Pseudomonadaceae* (13.2 %). No statistical differences were found on family level for seeds or leaves compared to coated control (K), but notable is the low concentration of *Enterobaceriaceae* in leaf sample B_{L} (0.2 %), and the higher concentrations in A_{L} (12.6 %) and C_{L} (13.5 %). The most abundant genera on seeds were *Pseudomonas* (22.0 %), followed by *Pantoea* (11.9 %), and on leaves, the most abundant were *Exiguobacterium* (28.6 %) *Pantoea* (20.1 %) and *Pseudomonas* (13.2 %).

The differential abundance of N, A, B, C and D vs. K on genus level can be seen in the log 2 fold change plots in Figure 3. The abundance of amplicon sequence variants (ASVs) belonging to *Pseudomonas* on the seeds were higher in uncoated seeds compared to coated control (N_{S} vs K_{S}). Seeds coated with *P*. *cedrina* LMG P-32207and *P. punonensis* LMG P-32204 (A_{S} and B_{S} vs K_{S}) had a higher ASV abundance of *Escherichia-Shigella,* while coating with *B*. *coagulans* LMG P-32205 and LMG P-32206 strains (C_{S} and D_{S} vs K_{S}) raised the ASV abundance of *Pseudomonas* and *Lactobacillus.*

The seed coating process also rendered many changes in the microbiota of the leaves, among others *Pantoea* and *Pseudomonas* species. Higher ASV abundances of *Erwinia, Duganella* and *Exiguobacterium* were also observed. All antagonistic stains (A_{L}-D_{L} vs K_{L}) on the leaves lower the ASV abundance of *Erwinia* or *Pectobacterium,* and group D_{L} (*B. coagulans* LMG P-32206) displayed a lower ASV abundance of *Pantoea.*

When comparing seeds and leaves from the same group (Figure 4), a large range of genera were in higher abundance on the seeds compared to leaves. In groups A and B, *Escherichia-Shigella* was in higher abundance on seeds than on leaves.

### Diversity

The Chao1 α-diversity index for the groups was between 217.0 and 303.3 for seeds and between 82.0 and 98.0 for plants. The Shannon index was between 4.3 and 4.7 for seeds and between 2.4 and 2.8 for leaves. Chao1 and Shannon indices were neither significantly different within seed groups (N_{S}, K_{S}, A_{S}, B_{S}, C_{S} and D_{S}) and leaf groups (N_{L}, K_{L}, A_{L}, B_{L}, C_{L} and D_{L}), nor between leaf and seed samples for the same treatment (N_{L} vs Nₛ, K_{L} vs K_{S} etc.).

The β-diversity of the leaf samples which can be seen in Figure is higher in groups C and D compared to coated control, K. It is known that plants with a high microbial diversity has a higher pathogen invasion resistance.

Thus, antagonistic bacterial strains against potential, human pathogens on live plants in a commercial field setting has been disclosed herein. Through seed coating with antagonistic bacteria strains, it has been shown that it is possible to influence the microbial composition of the plant in a healthier direction for the consumer. In that way the risk of pathogenic multiplication and spread on leafy green vegetables can be reduced, and the consequences of their related outbreaks in the future can be mitigated.

### In vivo experiment

In the experiments as described above it was found that specific bacterial strains can decrease *E. coli* growth on leafy green vegetables. To evaluate their potential for commercial use, the present experiment aimed to measure the immunological response in the form of pro-inflammatory markers, and microbiota change assessment in healthy mice upon their administration. Animals were treated with antibiotics and *E. coli* before administration of these antagonistic bacteria to equalize the microbiota.

### Animals

Seventy wild type female C57BL/6N mice (Charles River Laboratories, Germany) were kept under standardized conditions in the animal facility and acclimatized for 7 days before start of the experimental protocol. The consumption of water and feed was provided ad libitum. The water consumption was measured every day throughout the experiment, and the feed consumption was registered at the end of the experiment. Body weights were registered at start, after pre-treatment and at the end. The animals were divided into seven groups (10 animals each, 5 animals per cage), normal control (N), treatment control (K) and five treatment groups (A-E), see Figure for the experimental design. Groups K and A-E received a pre-treatment with antibiotics supplemented with 2 % (v/w) fructose the first three days and thereafter *Escherichia coli* CCUG29300^{T} (10⁸ CFU/ml, diluted in Hogness' freezing medium) for 2 days to equalize the microbiota. An average dose of 5.2 mg metronidazole (Sanofi AB, Stockholm, Sweden), 3.5 mg amoxicillin (Mylan AB, Stockholm, Sweden) and 2.1 mg clindamycin (Orifarm Generics A/S, Odense, Denmark) was consumed by each mouse. Group N received only fructose the first three days, and only freezing medium the next two days. After the pre-treatment, groups A-E received one bacterial strain each (A: *Pseudomonas cedrina,* B: *Pseudomonas punonensis,* C: Rhodococcus cerastii , *D*: *Bacillus coagulans,* E: *Bacillus coagulans*) and freezing medium in the water (10⁸ CFU/ml), group K and N received only freezing medium for 16 days. On day 21, the animals were put under anesthesia with 1.0 mg/kg bodyweight medetomidine (Dormitor^{®} Vet, Orion Pharma Animal Health, Espoo, Finland) and 75 mg/kg bodyweight ketamine (Ketalar, Werner Lambert Nordic AB, Solna, Sweden) by intra-peritoneal injection. Arterial blood was collected, allowed to clot for 2 h and centrifuged (3000 rpm, 3 min, 4 °C), the serum frozen at -80 °C for later analysis of cytokines. Under aseptic technique, a laparotomy was performed through a midline incision, and mesenteric lymph nodes (MLNs) and Peyers' patches (PPs) were transferred to tubes containing HBSS (Biowest, Nuaillé, France) and kept on ice until analysis by flow cytometry. The spleen, the luminal content of small intestine and colon were carefully collected and weighed, and the small intestine and colon tissue was rinsed with isotonic saline. All samples were transferred to sterile tubes for myeloperoxidase and microbiota analysis. The animals were then euthanized by pentobarbital injection. The blood and intestine samples were frozen at - 81 °C. The MLNs and PPs were kept on ice and immediately analyzed by flow cytometry (FACS).

### Myeloperoxidase (MPO)

To measure the level of MPO, an enzyme found in neutrophils and a marker for local intestinal inflammation, small and large intestine samples were frozen in liquid nitrogen and weighed prior to homogenization in 1 ml potassium phosphate buffer (20 mM, pH 7.4) for 60 sec. The homogenate was thereafter centrifuged (14000 rpm, 10 min) and the pellet was re-suspended in 50 mM PBS (pH 6.0) with 0.5 % hexadecyltrimethyl-ammonium bromide. The sample was freeze-thawed and then sonicated for 90 secs and kept in water bath at 60 C for 2 h. After centrifugation (14000 rpm, 10 min) the 45 µl of supernatant was transferred to a 96-well plate, 150 µ 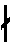 TMB substrate (BD Opt EIA^{™}, BD Biosciences, San Diego, CA, USA) added to each well and incubated in the dark for 15 min. The reaction was then terminated by addition of 100 µl 0.5 M H₂SO₄ per well and the samples were analyzed sprectrophotometrically at 450 nm. MPO (Sigma-Aldrich, St. Louis, MO, USA) was used as standard and values expressed as units MPO/g tissue.

### Terminal restriction fragment length polymorphism, T-FRLP

To determine microbial diversity by T-RFLP, DNA was extracted from large and small intestinal content by adding 500 µl PBS buffer to 50 mg sample and incubated at room temperature for 10 min. Thereafter, a bead beating step was performed for 45 min at 4 C on an Eppendorf mixer (Model 5432, Eppendorf, Hamburg, Germany) following a centrifuge step (30 secs, 3000 rpm). Then 200 µl of the supernatant was transferred to a sterile sample tube in the EZ1 DNA tissue kit (Qiagen, Sollentuna, Sweden), and DNA was extracted according to manufacturers' instructions on a Biorobot EZ1 workstation (Qiagen). PCR and restriction endonuclease (MSPI) digestion was performed. The digested amplicons were analyzed on an ABI 3130 xl Genetic analyzer (Applied Biosystems, Foster City, CA, USA) with internal size standard GeneScan LIZ 600 (range 20-600 bases, Applied Biosystems) at DNA lab (SUS, Malmö, Sweden). Data was analyzed with GeneMapper software version 4.0 (Applied Biosystems) with local southern algorithm. T-RFs were resolved between 40 and 580 bases considering that four internal standards were required for accurate sizing of an unknown T-RF. The relative area percentage was calculated for each T-RF which was used for diversity index calculation.

### Multiplex cytokine/chemokine analysis

For quantitative analysis of cytokines and chemokines (IFN-γ, IL1-β, IL-2, IL-4, IL-5, IL-6, KC/GRO, IL10, IL12p70, TNF-α), serum samples were thawed and added in duplicates in 1:2 dilutions to 96-well V-plex Proinflammatory Panel 1 (mouse) plates (Meso Scale Diagnostics, LLC, Rockville, MD, USA) according to manufacturer's instructions. The plates were read using MSD Sector S 600 plate reader (Meso Scale Diagnostics, LLC).

### Flow cytometry

Peyers' patches and mesenteric lymph nodes were cut into 1 mm pieces with a curved scissor and supernatant and fat was removed. The tissue was then digested with Collagenase P (0.8 mg/ml, Sigma-Aldrich, St. Louis, MO, USA), Dispase II (3.2 mg/ml, Sigma-Aldrich) and DNAse (0,1 mg/ml Sigma-Aldrich) for 10 min at 37°C. The supernatant was collected, and digestion was repeated twice until all tissue was digested. After centrifugation (1400 rpm, 5 min, 4 C), the supernatant was removed, resuspended in HBSS (Biowest, Nuaillé, France) w. 10 % fetal bovine serum (VWR, Radnor, USA) and filtered (40 µm cell strainer (VWR) The flow-through was centrifuged (1400 rpm, 5 min, 4 C), supernatant removed and the pellet resuspended in HBSS. A fraction of the cells was stained with Turks' (Merck KGaA, Darmstadt, Germany) and counted. The suspension was diluted to 10⁶ cells in HBSS (Biowest) and stained with the following antibody (ab) combinations overnight at 4 C:
TLR2/CD11c/F4:80/TLR4 (panel 1); CCR9/CD4/CD69/CD8a (panel 2); CD4/CD69/CD25/FoxP3 (panel 3). All combinations contained CD16/CD32 ab to block non-antigen-specific Fc binding (all ab come from eBioscience, Inc., San Diego, CA, USA) and use as a dump channel. For intranuclear FoxP3 (eBioscience, Inc., San Diego, CA, USA) staining, cells were fixed and permeabilized according to manufacturer's instructions and then resuspended in FACS buffer (eBiosciences).

Unstained cells were used as control, and for compensation, VersaComp Antibody Capture Bead kit (Beckman Coulter Inc., Brea, CA, USA) was used. The cells were washed once with FACS buffer and run on the Cytoflex flow cytometer (Becton Dickinson, Mountain view, CA, USA). Data analysis was made with Cytexpert 2.0 (Becton Dickinson) software with assessment of 50 000 events per sample. Lymphocyte populations from both PPs and MLNs were first gated based on forward (FSC) and side scatter (SSC) properties. From this gate, singlets were chosen based on FSC and FSC-Width. For panel 1, macrophages and dendritic cells were identified from the singlets by positive staining for F4/80 and CD11c respectively, those gates were then further used to analyze expression of TLR2 and/or TLR4. For panel 2, CD8+ and CD4+ cells were selected from the singlets, and individually gated for gut homing and activation, CCR9 and CD69 expression. For panel 3, activated and resting regulatory T cells were selected from the singlets by Foxp3+CD69- and Foxp3+CD69+.

### In vitro study

### Bacterial solutions

The same antagonistic strains as used in the animal study (section 0) were prepared in PBS 10^9 CFU/ml and heat-inactivated at 70°C for 30 minutes. Heat-inactivation was confirmed by a viability control on agar for 5 days and no colony growth was detected. In addition, three different strains of *E. coli* (prepared in the same way as the other bacterial solutions) were used for comparison.

### Isolation and differentiation of monocytes to MoDC

Peripheral blood mononuclear cells were isolated from leucocyte concentrate (Lund University Hospital) using gradient centrifugation (Ficoll-Paque ^{™} (GE Healthcare, Uppsala, Sweden), peripheral blood to Ficoll ratio: 1:1). CD14+ cells were isolated using anti-human CD14 magnetic microbeads (Miltenyi Biotec B.V. & Co. KG, Bergisch Gladbach, Germany) and the results confirmed by flow cytometry. Cells were then grown in R10 medium (RPMI 1640 (HyClone^{™}), 10 % FCS, 2 mM L-glutamine, 50 µg/ml Gentamicin) in sixwell plates. Cytokines human recombinant GM-CSF (PeproTech, Hamburg, Germany) (150 ng/ml) and IL-4 (50 ng/ml) (PeproTech) were added to the medium in order for monocytes to differentiate into MoDCs. Cells were cultured at 37°C and in the presence of 5% CO₂ for 8 days; on day 3 and 6 half the medium was changed.

### Stimulation of MoDCs with bacterial preparations

Differentiation into MoDCs was confirmed on day 7 of culture, by staining with CD14 (Dako, Santa Clara, CA, USA) and CD1a (Dako) (CD14-CD1a+ are differentiated). On day 8 of differentiation, MoDCs were counted and bacterial preparations added. The ratio between bacterial cells and MoDCs were 1:1 for FACS analysis and 10:1 for the multiplex cytokine assay. The concentration of cells was 500,000 cells/ml and the cells were seeded in a 24-well plate, 0.5 ml per well. LPS (5 ng/ml) (Sigma-Aldrich, St. Louis, USA) was used as positive control, and PBS was used as negative control. Cells were then cultured for 24 hours at 37°C in the presence of 5 % CO₂ with R10 medium.

### Flow cytometry

After 24 h of stimulation, cells were blocked with mouse IgG (100 µg/ml) (Jackson ImmunoResearch, Ely, UK), washed with MACS buffer (PBS, 0.5 % BSA (Bovine Serum Albumin), 2 mM EDTA) and incubated for 15 min at 4°C with the following antibodies: CD14 (Dako), CD1a (Dako), HLA-DR (BD Biosiences), CD86 (BD Biosiences), CD80 (BD Biosiences), CD54 (BD Biosiences), TLR2 (Biolegend, San Diego, CS, USA), TLR4 (Biolegend). Cells were analyzed with BD FACSCanto^{™} II (BD Biosciences) and 10000 events were collected. Data was analyzed with FCS express 4 (De Novo Software, Glendale, CA, USA); viable cells were gated. Forward and side scatter is used to gate viable cells (Gate 1). From gate 1, PE and FITC positive cells were selected. In a second plot, gate 1 was used to select APC and FITC positive cells. The degree of activation of cells treated with bacteria was calculated for each marker according to: $X = \frac{% of positive cells in sample}{% of positive cells in untreated control}$

For HLA-DR, the percentage of positive cells is near 98 % in all samples, so instead the following equation was used, indicating the intensity of the emitted fluorochrome light: $\frac{median value of sample}{median value of untreated control}$

### Multiplex cytokine assay (in vitro samples)

Supernatant from cell cultures collected after 24 hours of bacterial stimulation with a ratio 10:1 bacterial to human cells was analyzed for the concentration of ten different cytokines (IFN-γ, IL1-β, IL-2, IL-5, IL-6, IL-8, KC/GRO, IL10, IL12p70, TNF-α) with a multiplex immunoassay (Human Custom ProcartaPlex^{™} 10-plex, Thermo Fisher scientific, Vienna, Austria) according to manufacturer's instructions (exception; beads were vortexed 60 seconds instead of 10 seconds). Concentrations of cytokines were then measured in technical duplicates using a Bio-Plex^{™}200 system (Bio-Rad, Hercules, CA, USA).

### Statistical analysis

The statistical calculations of feed and water intake, MPO activity cytokine/chemokine data, diversity indices and FACS data were performed with SigmaPlot v 13.0 software (SPSS Inc., Chicago, USA). The differences between all groups were assessed by Kruskal-Wallis one-way ANOVA on ranks and the differences between two experimental groups were assessed by a Mann-Whitney rank sum test. Results were considered statistically significant when p ≤ .05. Values are presented as median with 25^{th} and 75^{th} percentiles. The statistical calculations of frequency of occurrence of T-RFs within groups were performed with Fisher's test. The FACS data from the cell culture was evaluated with Friedman's test using GraphPad Prism 8.01 (GraphPad Software, San Diego, CA, USA).

### In vivo study

### Animals

The recordings of animal weights and feed and water intake during the animal study can be seen in Table 2. Data is analyzed over the whole experiment period, and also divided into two parts; the pre-treatment period when the animals received antibiotics and *E. coli,* and the treatment period when the animals received antagonistic bacteria in the drinking water. Over the whole experiment period of three weeks, animals gained between 1.0 and 1.9 g in weight, and consumed between 61.0 and 63.9 g of feed. The water intake was between 18.5 and 20.0 ml per day. No significant changes in the median values between the groups compared to the treatment control group (K) could be found for body weight, feed or water intake from start to end, and also not during the treatment period. During the pre-treatment period, an increase in body weight compared to the normal control group (N) was observed for all groups but for group C.

**Table 2: Body weights and feed and water intake per animal during the whole experimental period, over the pre-treatment period and over the treatment period.**

| **Group** | **N (normal control)** | **K (treatment control)** | **A *P. cedrina*** | **B *P. punonensis*** | **C *R. cerastii*** | **D *B. coagulans*** | **E *B. coagulans*** |
|---|---|---|---|---|---|---|---|
| **Start to end** | | | | | | | |
| Body weight change (g)^{a} | 1.6 (0.8-2.2) | 1.5 (1.1-1.8) | 1.0 (0.2-1.9) | 1.9 (0.9-2.1) | 1.3 (0.7-2.0) | 1.8 (0.8-2.6) | 1.9 (0.9-3.2) |
| Feed intake (g)^{b} | 62.7 (0.41) | 63.5 (1.7) | 61.0 (5.4) | 62.7 (1.6) | 68.2 (0.7) | 62.8 (3.1) | 63.9 (2.1) |
| Water intake/day (ml) ^{a} | 20.0 (19.0-20.0) | 20.0 (18.0-22.0) | 18.5 (16.0-20.5) | 20.0 (18.0-22.0) | 20.0 (16.5-23.5) | 18.5 (16.0-24-0) | 20.0 (18.0-24.0) |

| **Pretreatment period** | | | | | | | |
|---|---|---|---|---|---|---|---|
| Body weight change (g)^{a} | 0.2 (-0.5-0.2) | 0.6 (0.3-0.9)^{††} | 0.5 (0.1-1.2)^{†} | 1.0 (0.8-1.7)^{†††} | 0.0 (-1.7-1.6) | 1.6 (1.3-2.0)^{†††} | 1.3 (1.0-1.5)^{†††} |
| Water intake/day (ml) ^{a} | 20.0 (20.0-25.0) | 8.0 (6.0-34.5) | 6.0 (4.0-32.0) | 8.0 (7.0-32.0) | 10.0 (5.0-31.0) | 9.0 (8.0-33.0) | 13.0 (3.5-34.5) |
| Treatment period | | | | | | | |
| Body weight change (g)^{a} | 1.3 (0.9-2.5) | 0.9 (0.4-1.3) | 0.2 (-0.4-1.0) | 0.5 (0.0-0.9) | 1.3 (0.1-2.3) | 0.15 (-0.6-1.1) | 0.6 (0.0-1.5) |
| Water intake/day (ml) ^{a} | 20.0 (18.5-20.0) | 20.0 (18.0-22-0) | 19.0 (17.0-20.0) | 20.0 (18.0-22.0) | 20.0 (17.3-23.0) | 19.0 (16.0-23.0) | 20.0 (18.3-24.0) |

| | | | | | | | |
|---|---|---|---|---|---|---|---|
| ^{a} Data is expressed as median values of 10 individuals with interquartile range (25-75 %). ^{b} Data is expressed as average value of two cages (5 animals in each) with standard deviation (). ^{†} P<0.05, ^{††} P<0.01 and ^{†††} P<0.001 compared to normal control (N) in the same row. No differences in spleen weights were found between the groups [N; 0.095 g (0.089-0.108), K; 0.091 g (0.080-0.096) A; 0.090 g (0.073-0.094), B; 0.095 g (0.081-0.104) C; 0.094 g (0.083-0.116), D; 0.095 g (0.087-0.103), E; 0.092 g (0.080-0.098)]. | | | | | | | |

### Myeloperoxidase (MPO)

The levels of MPO, an enzyme found in neutrophils and a marker for local intestinal inflammation, were measured in the small and large intestine. No statistically significant differences in the median values of MPO concentration between the groups could be found in the large or in the small intestine, although a decreasing trend was seen for animals receiving *R. cerastii* (group C) in the small intestine. For group D, and E that received different strains of *B*. *coagulans,* a decreasing trend can be seen in both the small intestine, and in the large intestine.

### Terminal restriction fragment length polymorphism, T-FRLP

Seventeen terminal restriction fragments (T-RFs) in the small intestine were detected with significantly different occurrence between the groups and the treatment control (K) **Error! Reference source not found.**). Two to four T-RFs were only detected in the different treatment groups (A-E) and not in the treatment control group (K). In the large intestine, 25 T-RFs could be detected with significantly different occurrence compared to control (Table 4**Error**! **Reference source not found.**), and three to six T-RFs were only detected in the treatment groups compared to the control group. Most new peaks were detected in group A that received *P*. *cedrina,* and the fewest new peaks were detected for animals receiving *P. punonensis* (B) in both the small and large intestine.

**Table 3: Size of T-RFs detected in small intestine that have significantly different frequency of occurrence between the different groups and control (K)**

| T-RFs | N | K | A | B | C | D | E |
|---|---|---|---|---|---|---|---|
| 82.62 | 7^{**} | 0 | 1 | 0 | 3 | 3 | 5 |
| 83.55 | 1 | 0 | 9^{***} | 3 | 6^{*} | 1 | 5 |
| 84.83 | 8 | 8 | 8 | 0^{***} | 6 | 9 | 6 |
| 87.26 | 0^{*} | 6 | 7 | 0^{*} | 0^{*} | 0^{*} | 0^{*} |
| 90.43 | 6* | 0 | 1 | 1 | 4 | 1 | 1 |
| 94.38 | 2 | 0 | 6^{*} | 0 | 1 | 2 | 1 |
| 150.93 | 1 | 0 | 3 | 0 | 4 | 6^{*} | 6* |
| 160.51 | 6* | 0 | 0 | 1 | 0 | 0 | 0 |
| 179.24 | 0 | 0 | 0 | 6^{*} | 0 | 0 | 0 |
| 184.85 | 7 | 10 | 9 | 0^{***} | 9 | 9 | 9 |
| 265.90 | 0 | 0 | 1 | 8^{***} | 0 | 0 | 2 |
| 266.98 | 9 | 10 | 5 | 0^{***} | 10 | 10 | 10 |
| 284.12 | 1 | 0 | 5^{*} | 0 | 7^{**} | 8^{***} | 8^{***} |
| 290.28 | 5^{*} | 0 | 0 | 0 | 0 | 0 | 0 |
| 491.45 | 0 | 0 | 1 | 0 | 6* | 1 | 0 |
| 495.44 | 0^{*} | 6 | 8 | 0^{*} | 9 | 0^{*} | 0^{*} |
| 574.30 | 3 | 0 | 6^{*} | 0 | 7^{**} | 6^{*} | 6^{*} |

| | | | | | | | |
|---|---|---|---|---|---|---|---|
| *P<0.05, **P<0.01, ***P<0.001 compared to treatment control, K | | | | | | | |

**Table 4: Size of T-RFs detected in large intestine that have significantly different frequency of occurrence between the different groups and control (K)**

| T-RFs | N | K | A | B | C | D | E |
|---|---|---|---|---|---|---|---|
| 82,62 | 0^{***} | 9 | 0^{***} | 5 | 0^{***} | 0^{***} | 0^{***} |
| 83,55 | 0 | 0 | 8^{***} | 1 | 3 | 2 | 5 |
| 84,83 | 10 | 10 | 9 | 6 | 0^{***} | 9 | 9 |
| 87,26 | 10 | 10 | 7 | 0^{***} | 0^{***} | 0^{***} | 9 |
| 88,23 | 0 | 0 | 8^{***} | 4 | 9^{***} | 4 | 4 |
| 90,43 | 8 | 8 | 9 | 6 | 6 | 0^{***} | 8 |
| 92,39 | 7^{*} | 0 | 7^{**} | 3 | 1 | 6^{*} | 5 |
| 94,38 | 10 | 10 | 9 | 0^{***} | 0^{***} | 8 | 9 |
| 131,42 | 0^{**} | 7 | 0^{**} | 0^{**} | 0^{**} | 0^{**} | 0 ^{**} |
| 141,18 | 0 | 0 | 2 | 5^{*} | 8^{***} | 0 | 1 |
| 176,98 | 4 | 0 | 0 | 2 | 3 | 6^{*} | 3 |
| 207,52 | 0^{**} | 7 | 6 | 0^{**} | 0^{**} | 0^{**} | 9 |
| 216,84 | 0^{*} | 6 | 0^{*} | 0^{*} | 0^{*} | 0^{*} | 0 ^{*} |
| 218,54 | 4 | 0 | 4 | 2 | 5 | 6^{*} | 6^{*} |
| 220,67 | 3 | 0 | 7^{**} | 3 | 5 | 6^{*} | 6^{*} |
| 276,30 | 2 | 0 | 0 | 3 | 7^{**} | 3 | 5 |
| 283,16 | 2 | 0 | 7^{**} | 5 | 8^{***} | 5 | 6^{*} |
| 284,12 | 6^{*} | 0 | 4 | 5^{*} | 4 | 4 | 5 |
| 285,11 | 8^{***} | 0 | 2 | 2 | 3 | 1 | 7 ^{**} |
| 290,28 | 0^{*} | 6 | 0^{*} | 0^{*} | 0^{*} | 0^{*} | 0^{*} |
| 294,21 | 0^{*} | 6 | 9 | 0^{*} | 8 | 6 | 9 |
| 296,05 | 0^{*} | 6 | 8 | 0^{*} | 8 | 6 | 0^{*} |
| 495,44 | 0 | 0 | 10^{***} | 5^{*} | 8^{***} | 6^{*} | 7 ^{**} |
| 543,81 | 0^{***} | 8 | 0^{***} | 0^{***} | 0^{***} | 0^{***} | 8 |
| 546,49 | 10 | 10 | 9 | 4 | 0^{***} | 8 | 9 |

| | | | | | | | |
|---|---|---|---|---|---|---|---|
| ^{*} P<0.05, ^{**} P<0.01, ^{***} P<0.001 compared to treatment control, K | | | | | | | |

The microbial diversity was calculated based on the T-RFLP patterns, using the peak area of each sample in proportion to the total area of a sample and can be seen in Table 5. The median values of Shannon-Wiener diversity index (H') varied between 1.31 and 1.49 for the treatment groups compared to 1.22 for the treatment control group (K) in the small intestine. For the large intestine, Shannon-Wiener diversity index varies between 2.20 and 2.50 for the treatment groups compared to treatment control (K). Group B (*P. punonensis*) in the small intestine and group E (*B. coagulans*) in the large intestine both had median values that differed significantly from the treatment control group (K). The median values of Simpson's index varied between 0.74 and 0.89 for the treatment groups (A-E) compared to treatment control (K) in the large intestine, and in the small intestine, the values ranged between 0.57 and 0.70 for the treatment groups compared to treatment control. The median of Simpson's index in group E in the large intestine was significantly different than the one in treatment control group.

**Table 5: Shannon-Wiener (H') diversity index in the small intestine (SI) and in the large intestine (LI). Data is expressed as median values of 10 individuals with interquartile range (25-75 %).**

| Group | Shannon-Wiener (H'), SI^{a} | Shannon-Wiener (H'), LI^{a} |
|---|---|---|
| N | 1.63 (1.53-1.80)^{**} | 2.54 (1.99-2.75) |
| K | 1.22 (0.77-1.37) | 2.05 (1.76-2.47) |
| A | 1.49 (1.10-1.53)^{†} | 2.20 (2.01-2.59) |
| B | 1.43 (1.33-1.77)^{*} | 2.27 (1.52-2.44) |
| C | 1.31 (1.08-1.56)^{†} | 2.50 (1.94-2.81) |
| D | 1.29 (0.99-1.45)^{†} | 2.15 (1.85-2.46) |
| E | 1.36 (1.25-1.57)^{†} | 2.73 (2.51-2.86)^{**} |

| | | |
|---|---|---|
| ^{†} P<0.05 compared to normal control (N) in the same column ^{*} p<0.05, ^{**} p<0.01 compared to treatment control (K) in the same column | | |

### Multiplex cytokine/chemokine analysis

The levels of cytokines/chemokines in mouse serum were measured at the end of the study. Administration of the antagonistic bacteria led to significantly elevated levels of IFN-γ in animals receiving *P*. *cedrina* (A), and *B*. *coagulans* (D, E) compared to treatment control, K. Additionally, significantly higher levels of KC/GRO were observed for group C (*R. cerastii*), D and E compared to K.

### Flow cytometry

Mononuclear immune cells from Peyer's patches and mesenteric lymph nodes were analyzed by flow cytometry. In the mesenteric lymph nodes (Figure 7), the percentage of activated CD4+ immune cells (including, T cells, dendritic cells and macrophages) and CD8+ cells (expressed predominantly by cytotoxic T cells) were reduced in the treatment control (K) compared to the normal control (N). For both CD4+ and CD8+ cells, animals receiving *B*. *coagulans* (D, E) have larger populations than K, and group A (*P*. *cedrina*) and C (*R. cerastii*) have smaller populations than K. For gram positive bacteria induced regulation (TLR2+) of dendritic cells (CD11c+) and macrophages (F4/80+), populations increase from N to K. Groups receiving *Pseudomonas* strains and *R. cerastii* (A-C) remain on the same level as K in CD11c (dendritic cells), while groups receiving *B*. *coagulans* (D, E) return to the same level as the normal control. In F4/80 (macrophages), all groups are on the same level as treatment control, or higher. Activated regulatory T cells (CD69+CD4+CD25+FOXP3+) levels decreased from normal control to treatment control, and in all treatment groups, higher levels of these cells are found compared to treatment control.

### In vitro study

Before bacterial stimulation on a 24-well plate, cells were checked in the microscope and found to have a similar, round shape in all wells, with only few single cells attached to the wells. After 24 h of stimulation, cells that were incubated with bacterial preparations B and C had formed small clusters, possibly indicating activation, and were attached to the plate surface. Cells incubated with bacteria *P*. *cedrina* (A), and *B*. *coagulans* (D, E) had few clusters but also attached to the plate surface. Untreated cells and cells treated with PBS did not show clustering but also a few cells attached. Cell viability was >95 % in all donors used.

### MoDC activation marker expression assessed by flow cytometry

Human MoDCs derived from five individuals were stimulated for 24 hours with controls and different bacterial preparation. Dendritic cell activation markers CD80/CD86 and HLA-DR were investigated by flow cytometry and the results are shown in **Error! Reference source not found.** 8. Overall, similar patterns can be observed. Cells stimulated with E. coli 1, 2, 3 and bacteria preparations A2 and A3 seemed to cause a higher activation of MoDCs compared to the untreated cells and the cells treated with PBS. A similar pattern is seen for all markers. Most consistent and prominent activation was induced by the different E.coli strains (significant compared to control for CD80 and CD86 expression). *Pseudomonas punonensis* (B) and Rhodococcus cerastii (C) also led to an increased expression of CD80, which is mirrored by the pattern of CD86 expression and the increase in median fluorescence intensity of HLA-DR expression. In contrast, cells exposed to *Pseudomonas cedrina* (A) and B. coagulans strains (D and E), did not seem to induce a change in the DC activation markers observed here.

### Multiplex cytokine profiling

The cell culture supernatant from three donors after bacterial stimulation with a ratio 10:1 bacterial cells to MoDCs was collected to quantify expressed cytokines. In Figure 9 the concentrations of IL-6, IL-12p70, IL-1β and IFN-γ are presented, remaining cytokine data not shown due to high variation and no clear trends. No statistical evaluation was performed due to low number of replicates.

A similar pattern as observed for MoDC activation emerged: the *E. coli* strains and *P. punonensis* (B) and *R. cerastii* (C) seemed to be able to stimulate production of IL-6, IL-12p70, IL-1β and IFN-γ compared to neg. control (PBS). IL-6 levels also appeared to increase in response to LPS and B. *coagulans* stimulation (D and E).

To conclude the experiment, the immunomodulatory effects of *E. coli* antagonistic bacterial strains in mice indicate that group D and E receiving *B*. *coagulans* strains consistently resemble more the normal control, indicating a recovery from the pretreatment with antibiotics and *E. coli* and a lower inflammation status in the bowel. This is in line with the results obtained *in vitro* with human MoDCs, where it is seen no or only a low increase of DC activation marker expression and pro-inflammatory cytokine expression. The two strains of *B*. *coagulans* seem to generate positive effects. According to the present invention it has been shown great initial potential for B. *coagulans* to be used as biocontrol agents against *E. coli* and enhance the safety on leafy green vegetables.

Finally, according to the present invention there has been provided four antagonistic bacterial strains, *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207, having potential against human pathogens on live plants in a commercial field setting. Through seed coating with above said bacterial strains, it has been shown that it is possible to influence the microbial composition of the plant in a healthier direction for the consumer. In that way the risk of pathogenic multiplication and spread on leafy green vegetables can be reduced, and the consequences of their related outbreaks in the future can be mitigated. In addition, administration of all *E. coli* antagonistic strains *in vivo* saw a restoring effect on the microbiota compared to treatment control, and two of the strains (*Pseudomonas punonensis* and *Bacillus coagulans*) increased Shannon-Wiener diversity index, correlating to host health.

## Claims

1. A bacterial strain isolated from edible leaves chosen from the group consisting of *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207.

2. A composition comprising at least one bacterial strain chosen from the group consisting of *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207.

3. A composition according to claim 2, wherein said composition comprises a combination of *Pseudomonas punonensis* having accession number LMG P-32204, *Bacillus coagulans* having accession number LMG P-32205, *Bacillus coagulans* having accession number LMG P-32206, and *Pseudomonas cedrina* having accession number LMG P-32207.

4. Use of at least one bacterial strain according to claim 1 or a composition according to claim 2 or 3, for preventing establishment and growth of human pathogens on seeds and vegetables or as bio-fertilizer.

5. Use according to claim 4, wherein said vegetables are leafy vegetables greens.

6. Use according to claim 4, wherein said at least one strain is added to washing water for washing of the vegetables prior to packaging or is sprayed on the vegetables before, during or after packaging of the vegetables in a package.

7. Use according to claim 4, wherein said at least one strain is added to water in connection with irrigation or added to a nutrient solution in a hydroponic growth system.

8. Use according to claim 4, wherein said at least one strain is applied on the inside of a package or is applied in the lining of the package or in the packaging material of the package.

9. Use according to claim 4, wherein said at least one strain is coated on seeds before sowing.

10. Use according to claim 9, wherein said at least one strain is coated on seeds with an amount of 10⁴ - 10¹² cfu/ml.

11. Use of a strain according to claim 1, for increasing the bacterial diversity on vegetables such as leafy vegetables as obtained after sowing.

12. At least one isolated strain according to claim 1 or a composition according to claim 2 or 3 for use in protection against infection in humans.

## Patentansprüche

1. Bakterienstamm, isoliert aus essbaren Blättern, ausgewählt aus der Gruppe bestehend aus Pseudomonas punonensis mit der Zugangsnummer LMG P-32204, Bacillus coagulans mit der Zugangsnummer LMG P-32205, Bacillus coagulans mit der Zugangsnummer LMG P-32206 und Pseudomonas cedrina mit der Zugangsnummer LMG P-32207.

2. Zusammensetzung, umfassend mindestens einen Bakterienstamm, ausgewählt aus der Gruppe bestehend aus Pseudomonas punonensis mit der Zugangsnummer LMG P-32204, Bacillus coagulans mit der Zugangsnummer LMG P-32205, Bacillus coagulans mit der Zugangsnummer LMG P-32206 und Pseudomonas cedrina mit der Zugangsnummer LMG P32207.

3. Zusammensetzung nach Anspruch 2, wobei die Zusammensetzung eine Kombination von Pseudomonas punonensis mit der Zugangsnummer LMG P-32204, Bacillus coagulans mit der Zugangsnummer LMG P-32205, Bacillus coagulans mit der Zugangsnummer LMG P-32206 und Pseudomonas cedrina mit der Zugangsnummer LMG P32207 umfasst.

4. Verwendung von mindestens einem Bakterienstamm nach Anspruch 1 oder einer Zusammensetzung nach Anspruch 2 oder 3 zur Verhinderung der Ansiedlung und des Wachstums von humanpathogenen Erregern auf Saatgut und Gemüse oder als Biodünger.

5. Verwendung nach Anspruch 4, wobei es sich bei dem Gemüse um Blattgemüse handelt.

6. Verwendung nach Anspruch 4, wobei der mindestens eine Stamm zu Waschwasser zum Waschen des Gemüses vor dem Verpacken gegeben wird oder vor, während oder nach dem Verpacken des Gemüses in einer Verpackung auf das Gemüse gesprüht wird.

7. Verwendung nach Anspruch 4, wobei der mindestens eine Stamm im Zusammenhang mit der Bewässerung zu Wasser gegeben wird oder zu einer Nährstofflösung in einem hydroponischen Wachstumssystem gegeben wird.

8. Verwendung nach Anspruch 4, wobei der mindestens eine Stamm auf die Innenseite einer Verpackung aufgebracht wird oder in der Auskleidung der Verpackung oder im Verpackungsmaterial der Verpackung aufgebracht wird.

9. Verwendung nach Anspruch 4, wobei der mindestens eine Stamm vor der Aussaat auf Samen aufgebracht wird.

10. Verwendung nach Anspruch 9, wobei der mindestens eine Stamm in einer Menge von 10⁴ - 10¹² cfu/ml auf Samen aufgebracht wird.

11. Verwendung eines Stammes nach Anspruch 1 zur Erhöhung der bakteriellen Vielfalt auf Gemüse wie Blattgemüse, wie es nach der Aussaat vorliegt.

12. Mindestens ein isolierter Stamm nach Anspruch 1 oder eine Zusammensetzung nach Anspruch 2 oder 3 zur Verwendung beim Infektionsschutz beim Menschen.

## Revendications

1. Souche bactérienne isolée à partir de feuilles comestibles choisie dans le groupe constitué par Pseudomonas punonensis ayant le numéro d'accession LMG P-32204, Bacillus coagulans ayant le numéro d'accession LMG P-32205, Bacillus coagulans ayant le numéro d'accession LMG P-32206 et Pseudomonas cedrina ayant le numéro d'accession LMG P-32207.

2. Composition comprenant au moins une souche bactérienne choisie dans le groupe constitué par Pseudomonas punonensis ayant le numéro d'accession LMG P-32204, Bacillus coagulans ayant le numéro d'accession LMG P-32205, Bacillus coagulans ayant le numéro d'accession LMG P-32206 et Pseudomonas cedrina ayant le numéro d'accession LMG P32207.

3. Composition selon la revendication 2, dans laquelle ladite composition comprend une combinaison de Pseudomonas punonensis ayant le numéro d'accession LMG P-32204, Bacillus coagulans ayant le numéro d'accession LMG P-32205, Bacillus coagulans ayant le numéro d'accession LMG P-32206 et Pseudomonas cedrina ayant le numéro d'accession LMG P32207.

4. Utilisation d'au moins une souche bactérienne selon la revendication 1 ou d'une composition selon la revendication 2 ou 3, pour empêcher l'établissement et la croissance d'agents pathogènes humains sur des semences et des légumes ou comme bio-engrais.

5. Utilisation selon la revendication 4, dans laquelle lesdits légumes sont des légumes verts à feuilles.

6. Utilisation selon la revendication 4, dans laquelle ladite au moins une souche est ajoutée à de l'eau de lavage pour le lavage des légumes avant l'emballage ou est pulvérisée sur les légumes avant, pendant ou après l'emballage des légumes dans un emballage.

7. Utilisation selon la revendication 4, dans laquelle ladite au moins une souche est ajoutée à de l'eau en connexion avec une irrigation ou ajoutée à une solution de nutriments dans un système de croissance hydroponique.

8. Utilisation selon la revendication 4, dans laquelle ladite au moins une souche est appliquée sur l'intérieur d'un emballage ou est appliquée dans la doublure de l'emballage ou dans le matériau d'emballage de l'emballage.

9. Utilisation selon la revendication 4, dans laquelle ladite au moins une souche est enrobée sur des semences avant le semis.

10. Utilisation selon la revendication 9, dans laquelle ladite au moins une souche est enrobée sur des semences en une quantité de 10⁴-10¹² ufc/ml.

11. Utilisation d'une souche selon la revendication 1, pour augmenter la diversité bactérienne sur des légumes tels que des légumes à feuilles tels qu'obtenus après semis.

12. Souche(s) isolée(s) selon la revendication 1 ou composition selon la revendication 2 ou 3 pour une utilisation dans la protection contre une infection chez des humains.
